# EUROPEAN PATENT SPECIFICATION

(11) **EP 3 404 872 B1**
(45) Date of publication and mention of the grant of the patent: **27.01.2021**
(21) Application number: 18182965.6
(22) Date of filing: 31.03.2011
(51) Int. Cl.: H04L 12/28, H04L 29/06, H04L 12/801

(54) **DEVICE CONTROL METHOD, NETWORK DEVICE, AND NETWORK SYSTEM**
VORRICHTUNGSSTEUERUNGSVERFAHREN, NETZWERKVORRICHTUNG UND NETZWERKSYSTEM
PROCÉDÉ DE COMMANDE DE DISPOSITIF, DISPOSITIF ET SYSTÈME DE RÉSEAU

(30) Priority: 31.03.2010 CN 201010137702
(43) Date of publication of application: 21.11.2018
(62) Divisional of application: 15172848.2
(73) Proprietor: Huawei Device (Shenzhen) Co., Ltd., Shenzhen, Guangdong 518129 (CN)
(72) Inventor: WU, Huangwei, Shenzhen, Guangdong 518129, P.R. (CN); ZHU, Yu, Shenzhen, Guangdong 518129, P.R. (CN); FANG, Ping, Shenzhen, Guangdong 518129, P.R. (CN); ZHANG, Qinliang, Shenzhen, Guangdong 518129, P.R. (CN)
(74) Representative: Gill Jennings & Every LLP

(56) References cited:
- EP-A1- 1 445 972
- EP-A1- 1 777 883
- EP-A2- 1 310 863
- WO-A1-2009/128163
- US-A1- 2004 150 530

## Description

### FIELD OF THE INVENTION

The present invention relates to network device interworking and control technologies, and in particular, to a device control method, a network device, and a network system.

### BACKGROUND OF THE INVENTION

Currently, with development of digital homes and digitization of consumer electronic products, more and more digital entertainment devices and electrical appliances appear in homes. A digital home network concept that is proposed in the art and is tried to be implemented is to connect these devices and products into a home network in a wired or wireless manner to implement such functions as content sharing or mutual control.

To implement interworking and control between various different home devices, more and more home network devices support a UPnP (Universal Plug and Play, universal plug and play) function. In a UPnP system, a user controls home devices through a control device in a home network, where the control device is generally called a CP (Control Point, control point). The CP, by using a UPnP protocol and invoking a related control command of a UPnP device, reads state information of the UPnP device in the home network, and controls the UPnP device to execute a corresponding operation. An existing UPnP protocol allows multiple CPs to simultaneously control a controlled device.

During the implementation of embodiments of the present invention, the inventor finds that the prior art has at least the following problems:
1. The existing UPnP protocol allows multiple CPs to simultaneously control a controlled device. Therefore, when a user operates a certain device, another CP may perform such an interference operation as restart on the device, thereby causing an operation failure of the user.
2. Ordinary access to a device affects efficiency of a major operation on the device.

EP 1 777 883 A1 discloses a method and apparatus that enables exclusive control of a device in a home network. A control point requests exclusive control authority from the device. In response to the request the control point receives an identifier used to successfully authenticate the exclusive control authority. The control point then acquires the exclusive control authority and controls the device.

WO 2009/128163 A1 discloses an information processing apparatus having a pre-reproduction connection information retaining element that retains information relating to a transmitting apparatus and a receiving apparatus of a connection existing before a reproduction of an interruption signal, when the connection is switched to the connection for transmitting the interruption signal in order to reproduce the interruption signal. Then, the recovering element recovers the connection existed before the reproduction of the interruption signal, based on the pre-reproduction connection information retained, after the reproduction of the interruption signal ends.

EP 1 445 972 A1 discloses a remote control system includes a plurality of control object terminals connected with a first network, a control server connected the first network and a second network to control the control object terminal and a remote control terminal connected with the second network. A remote control terminal issues a control request for a specific terminal of the plurality of control object terminals to the control server through the second network. The control server identifies the remote control terminal uniquely in response to the control request and carries out the control request in place of the remote control terminal when the remote control right of the specific terminal is allocated to the remote control terminal.

### SUMMARY OF THE INVENTION

Embodiments of the present invention provide a device control method, a network device, and a network system, so as to avoid interference with a major operation on a controlled device when multiple control devices simultaneously access the controlled device.

For the above purpose, the embodiments of the present invention provide the following technical solutions:

A device control method, comprising:
receiving a request for exclusive control from a first control device, and entering an exclusive mode;
receiving a first access request;
within valid time of the exclusive mode, judging whether the first access request is an access request sent by the first control device;
if yes, executing the first access request; and otherwise, directly rejecting or discarding (105) the first access request; and
receiving a second access request from a second control device;
wherein the request for exclusive control from the first control device comprises exclusion condition information including exclusive access interface information; and the method further comprises:
determining an interface requested to be accessed by the second access request; and in the case where the exclusive access interface information indicates an interface that is allowed to be accessed, executing the second access request in the event the interface is included in the exclusive access interface information, or rejecting the second access request in the event the interface is not included in the exclusive access interface information;
   or
in the case where the exclusive access interface information indicates an interface that is forbidden to be accessed, rejecting the second access request in the event the interface is included in the exclusive access interface information, or allowing the second access request in the event the interface is not included in the exclusive access interface information

A network device, comprising:
a receiving unit, configured to receive a request for exclusive control and an access request;
a controlling unit, configured to: after the receiving unit receives a request for exclusive control from a first control device, control the network device to enter an exclusive mode;
a judging unit, configured to: within valid time of the exclusive mode, after the receiving unit receives a first access request, judge whether the first access request is an access request sent by the first control device; and
an executing unit, configured to: when a judgment result of the judging unit is that the first access request is an access request sent by the first control device, execute the first access request; and otherwise, directly reject or discard the first access request; wherein the request for exclusive control comprises exclusion condition information including exclusive access interface information, and the controlling unit is further configured to:
   determine an interface requested to be accessed by a second access request received by the receiving unit from a second control device; and
   in the case where the exclusive access interface information indicates an interface that is allowed to be accessed, execute the second access request in the event the interface is included in the exclusive access interface information, or reject the second access request in the event the interface is not included in the exclusive access interface information;
      or
   in the case where the exclusive access interface information indicates an interface that is forbidden to be accessed, reject the second access request in the event the interface is included in the exclusive access interface information, or allow the second access request in the event the interface is not included in the exclusive access interface information.

A network system, comprising a controlled device, a first control device and a second control device, wherein:
the first control device is configured to send a request for exclusive control and an access request to the controlled device; and
the controlled device is configured to: receive the exclusive control request from the first control device and enter an exclusive mode; receive a first access request, and within valid time of the exclusive mode, judge whether the first access request is an access request sent by the first control device; and if yes, execute the first access request; and otherwise directly reject or discard the first access request;
wherein the request for exclusive control comprises exclusion condition information including exclusive access interface information, and in that the network system is further configured to determine an interface requested to be accessed by a second access request received by the receiving unit from the second control device; and in the case where the exclusive access interface information indicates an interface that is allowed to be accessed, execute the second access request in the event the interface is included in the exclusive access interface information, or reject the second access request in the event the interface is not included in the exclusive access interface information;
or
in the case where the exclusive access interface information indicates an interface that is forbidden to be accessed, reject the second access request in the event the interface is included in the exclusive access interface information, or allow the second access request in the event the interface is not included in the exclusive access interface information.

A network device, comprising:
a receiving unit, configured to receive a request for exclusive control and an access request from a first control device and a second access request from a second control device;
a controlling unit, configured to: after the receiving unit receives a request for exclusive control from a first control device, control the network device to enter an exclusive mode;
a judging unit, configured to: within valid time of the exclusive mode, after the receiving unit receives a first access request, judge whether the first access request is an access request sent by the first control device;
an executing unit, configured to: when a judgment result of the judging unit is that the first access request is an access request sent by the first control device, execute the first access request; and otherwise, determine, according to an exclusive condition, whether to execute the first access request;
wherein the request for exclusive control from the first control device comprises exclusion condition information including exclusive access interface information; and in that the network device is further configured to:
determine an interface requested to be accessed by the second access request; and in the case where the exclusive access interface information indicates an interface that is allowed to be accessed, execute the second access request in the event the interface is included in the exclusive access interface information, or reject the second access request in the event the interface is not included in the exclusive access interface information;
   or
in the case where the exclusive access interface information indicates an interface that is forbidden to be accessed, reject the second access request in the event the interface is included in the exclusive access interface information, or allow the second access request in the event the interface is not included in the exclusive access interface information.

With the device control method, the network device, and the network system provided in the embodiments of the present invention, in an environment where multiple control devices may control a controlled device, the controlled device enters an exclusive mode according to a request for exclusive control from a control device, that is, the controlled device determines which control device may temporarily monopolize the controlled device; within valid time of the exclusive mode, the controlled device normally executes an access request of an exclusive control device, but determines, according to an exclusive condition, whether to execute an access request from another control device, or directly reject or discard the access request from the another control device. In this way, reliability and efficiency of a continuous operation and a major operation that are performed by the exclusive control device on the controlled device are ensured, thereby avoiding possible interference with the major operation on the controlled device when multiple control devices perform control simultaneously.

### BRIEF DESCRIPTION OF THE DRAWINGS

FIG. 1 is a flowchart of a device control method according to an embodiment of the present invention;
FIG. 2 is a flowchart of message interaction between a control device and a controlled device in a device control method according to an embodiment of the present invention;
FIG. 3 is a schematic structural diagram of a network device according to an embodiment of the present invention;
FIG. 4 is another schematic structural diagram of a network device according to an embodiment of the present invention; and
FIG. 5 is another schematic structural diagram of a network device according to an embodiment of the present invention.

### DETAILED DESCRIPTION OF THE EMBODIMENTS

In order to make persons skilled in the art understand the solutions of the embodiments of the present invention more clearly, the embodiments of the present invention are described in further detail in the following with reference to the accompanying drawings and implementation manners.

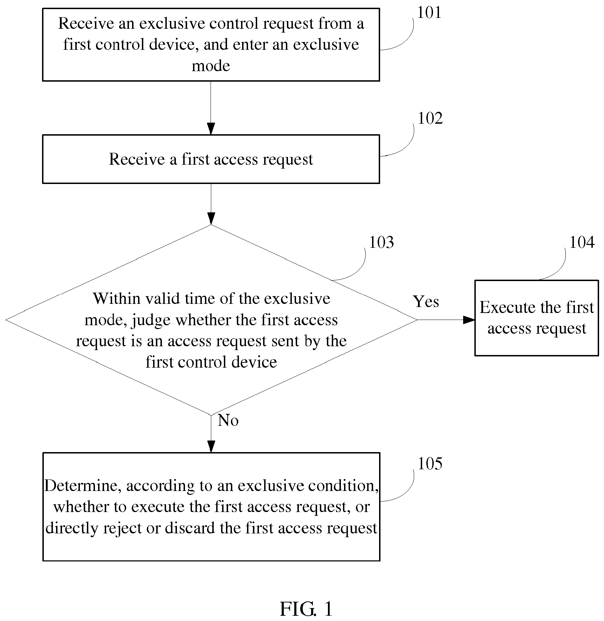

FIG. 1 is a flowchart of a device control method according to an embodiment of the present invention. The method includes the following steps:
Step 101: Receive a request for exclusive control from a first control device, and enter an exclusive mode.

For example, before performing a continuous and/or key operation on a controlled device, the first control device may send a request for exclusive control to the controlled device, so as to enable the controlled device to enter an exclusive mode.

After receiving the exclusive control request from the first control device, the controlled device enters the exclusive mode. Preferably, the controlled device may return a response message that corresponds to the exclusive control request to the first control device, so as to inform the first control device that the exclusive mode has already been enabled.

If multiple control devices send a request for exclusive control to the controlled device, the controlled device may enter, by using a first-come-first-served policy, an exclusive mode that corresponds to a corresponding control device.

Step 102: Receive a first access request.

Step 103: Within valid time of the exclusive mode, judge whether the first access request is an access request sent by the first control device; if yes, execute step 104; and otherwise, execute step 105.

Specifically, after the exclusive control request from the first control device is received, its corresponding first control device may be determined according to address information of the request. In this case, information such as its device ID, IP address, MAC address, certificate, and certificate hash value may be recorded. Whether the first access request is an access request sent by the first control device may be determined according to recorded device information.

Step 104: Execute the first access request.

Step 105: Determine, according to an exclusive condition, whether to execute the first access request, or directly reject or discard the first access request.

That is, if the exclusive mode is directed to the first control device, within the valid time of the exclusive mode, the first control device as a monopolist has an access right to access the controlled device. However, for an access request from another control device, there are multiple different processing manners according to the exclusive condition.

In this embodiment of the present invention, the exclusive condition may be a preset exclusive condition that corresponds to the first control device. For example, only a request for exclusive control initiator is allowed to access the controlled device within a certain period of time (for example, 60s) and/or within the certain number of times of invoking a command (for example, five times). That is, for exclusive control requests initiated by different control devices, exclusive conditions for starting the exclusive mode may be the same.

In addition, to further facilitate a flexible application of a user, when sending an exclusive control request, a control device may further carry exclusion condition information in the exclusive control request. After receiving the exclusive control request, a controlled device may set, according to the exclusion condition information in the exclusive control request, an exclusive condition that corresponds to the exclusive mode. Or, the control device may firstly set an exclusive condition through one or multiple exclusive control commands, and then send to the controlled device an exclusive control command that is used to start the exclusive mode and instruct the controlled device to start and apply an exclusive mode that corresponds to the preset exclusive condition. In this way, different exclusive conditions may be set for different control devices, so that differentiated services may be provided for different control devices.

In this embodiment of the present invention, the controlled device may determine, according to multiple different manners, whether the exclusive mode is within the valid time. For example:
(1) The valid time of the exclusive mode is determined according to a preset relationship between the first control device and exclusive valid time; or
   exclusive time information is carried in the control request, and the valid time is determined according to the exclusive time information.
(2) The number of continuous exclusive access requests of the first control device is determined according to a preset relationship between the first device and information of the number of continuous access requests; and if the recorded number of access requests of the first control device in the exclusive mode is smaller than the number of continuous exclusive access requests, the exclusive mode is within the valid time; or
   threshold information of the number of requests is carried in the control request, and a threshold of the number of exclusive access requests of the first control device is determined according to the threshold information of the number of requests; and if the recorded number of access requests of the first control device in the exclusive mode is smaller than the threshold of the number of exclusive access requests, the exclusive mode is within the valid time.
(3) First time is determined according to a preset relationship between the first control device and exclusive valid time, and the number of continuous exclusive access requests of the first control device is determined according to a preset relationship between the first control device and information of the number of continuous access requests; and if current time is within the first time and the recorded number of access requests of the first control device in the exclusive mode is smaller than the number of continuous exclusive access requests, the exclusive mode is within the valid time; or
exclusive time information and threshold information of the number of requests are carried in the control request, and second time is determined according to the exclusive time information; a threshold of the number of exclusive access requests of the first control device is determined according to the threshold information of the number of requests; and if current time is within the second time and the recorded number of access requests of the first control device in the exclusive mode is smaller than the threshold of the number of exclusive access requests, the exclusive mode is within the valid time.

It should be noted that in this embodiment of the present invention, after exclusive valid time expires, a corresponding exclusive mode may be invalid automatically. In addition, the exclusive mode may also be cancelled in advance by an exclusive control device or another control device. In this case, the method in this embodiment of the present invention may further include the following steps:
receiving an exclusive mode cancellation request; and if the exclusive mode cancellation request is a request sent by the first control device or a request sent by a control device whose level is higher than a level of the first control device, canceling the exclusive mode.

In addition, the exclusive mode may also be invalid automatically after the controlled device is restarted.

In this embodiment of the present invention, the method may further include the following steps: within the valid time of the exclusive mode, if the first access request is an access request sent by the first control device, updating a valid period of the exclusive mode (for example, an original valid period is set to 60s, and the exclusive control device may update the valid period to 80s through an exclusive control command; and in this case, the controlled device restarts timing); or in the exclusive valid time, any other access request sent by the control device may cause that the exclusive condition is updated automatically (for example, an original valid period is set to 60s, and another access request sent by the exclusive control device causes the controlled device to restart timing from 60s). In this way, an operation performed by the exclusive control device on the controlled device may be fully ensured.

Definitely, this embodiment of the present invention is not limited to these foregoing manners, and other manners may also be used to cancel the exclusive mode or update an exclusive valid period.

After the exclusive mode is invalid or is canceled, the controlled device may accept access requests of all control devices.

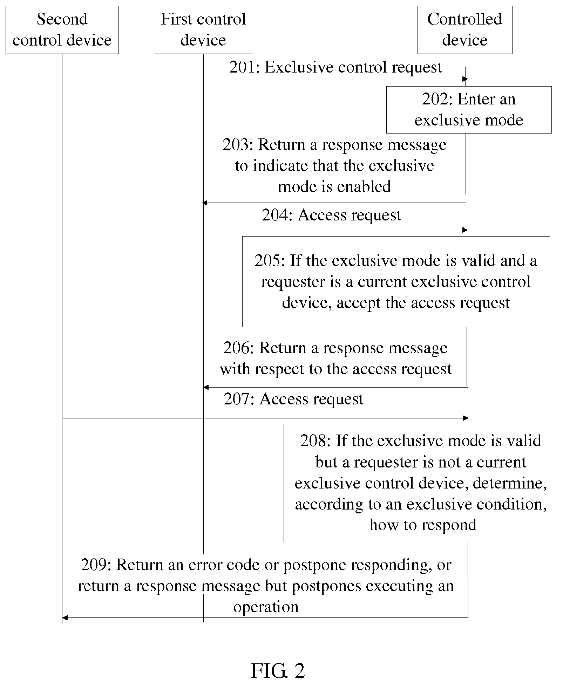

FIG. 2 is a flowchart of message interaction between a control device and a controlled device in a device control method according to an embodiment of the present invention.

201: A first control device sends a request for exclusive control to a controlled device.

202: After receiving the exclusive control request, the controlled device enters an exclusive mode.

203: The controlled device returns a response message to the first control device to indicate that the exclusive mode is enabled.

204: The first control device sends an access request to the controlled device.

205: After receiving the access request, if the controlled device determines that the exclusive mode is valid and a requester is a current exclusive control device, the controlled device accepts the access request.

206: The controlled device returns to the first control device a response message with respect to the access request.

207: A second control device sends an access request to the controlled device.

208: After receiving the access request, the controlled device determines that a requester is the second control device and determines, according to an exclusive condition, how to respond.

209: The controlled device returns an error code to reject the access request or postpone responding, or returns a response message but postpones executing an operation. Definitely, the controlled device may also discard the access request directly.

It can be seen that, with the device control method in this embodiment of the present invention, a controlled device determines, according to a request for exclusive control from a control device, which control device may temporarily monopolize the controlled device; within valid time of an exclusive mode, the controlled device normally executes an access request of an exclusive control device, but determines, according to an exclusive condition, whether to execute an access request from another control device, or directly reject or discard the access request from the another control device. In this way, reliability and efficiency of a continuous operation and a major operation that are performed by the exclusive control device on the controlled device are guaranteed, thereby avoiding possible interference with the major operation on the controlled device when multiple control devices perform control simultaneously.

To further enhance flexibility of an application, in this embodiment of the present invention, an access level may be set for each control device, and a control policy corresponding to each access level is set. These operations may be completed by a control center in a network or by any one control device or the controlled device, which is not limited in this embodiment of the present invention, but such information needs to be obtained by the controlled device.

In this way, before the controlled device starts an exclusive mode, that is, before step 202, the controlled device determines whether an access level of the first control device has an exclusive right; if yes, the controlled device enters the exclusive mode; and otherwise, the controlled device may not start the exclusive mode, that is, forbids the first control device to monopolize the controlled device. In addition, within the valid time of the exclusive mode, the controlled device may also cancel the exclusive mode according to a control policy that corresponds to each access level.

In addition, in this embodiment of the present invention, exclusion condition information may include exclusive access interface information, where exclusive access interfaces refer to some access interfaces affected by the exclusive mode on the controlled device. When the exclusive mode is started, for example, such access interfaces as a rebooting interface generally interrupt a continuous operation performed on the controlled device. Therefore, a non-exclusive device is forbidden to access this type of interfaces after the controlled device enters the exclusive mode; and in another example, such as interfaces for obtaining device information/status generally do not affect the controlled device in executing an operation command continuously, and thus are not affected by the exclusive mode. That is, even within exclusive valid time, any other control device may also access such interfaces normally.

The exclusive access interface information may be used to indicate an interface that is allowed to be accessed, and may also be used to indicate an interface that is forbidden to be accessed. In this way, before the controlled device executes the first access request, an interface requested to be accessed by the first access request is determined; if the interface requested to be accessed by the first access request is included in the exclusive access interface information, the first access request is executed; and otherwise, the first access request is rejected; or if the interface requested to be accessed by the first access request is included in the exclusive access interface information, the first access request is rejected; and otherwise, the first access request is executed. In this way, security of the controlled device may be better ensured. Definitely, after the exclusive mode is invalid or is cancelled, the controlled device may accept access of another control device. In this case, which interfaces are restricted to being accessed may be determined according to a preset set of accessible interfaces that correspond to control devices.

In another embodiment of the present invention, the exclusion condition information may further include an information set or a specified level of a control device. In this way, the determining, according to the exclusive condition, whether to execute the first access request may be: if the first access request is an access request sent by a second control device and the second control device is included in the information set or a level of the second control device is the specified level, executing the first access request.

In another embodiment of the present invention, the determining, according to the exclusive condition, whether to execute the first access request may be: if the first access request is an access request sent by a second control device and a level of the second control device is higher than a level of the first control device, executing the first access request.

In another embodiment of the present invention, the determining, according to the exclusive condition, whether to execute the first access request may be: rejecting an access request from another control device; or postponing executing the access request from the another control device; or discarding the access request from the another control device.

Definitely, this embodiment of the present invention is not limited to the foregoing manners, and multiple variations may be available according to this idea, which are described in the following by using examples.

It is assumed that an access level is set for each control device, and levels are Public->Basic->Admin in ascending order. Each level corresponds to a set of accessible interfaces. A control device with a Public level is untrustful for the controlled device, and therefore, only an interface that slightly affects the controlled device may be accessed, for example, an interface for obtaining a current status of a device GetStatus(); a control device with a Basic level may access more interfaces, for example, an interface for rebooting a device Reboot(); and a control device with an Admin level may access all interfaces.

Therefore, the following one or multiple policies may be set to protect a device.
(1) An interface for enabling/disabling an exclusive mode can be invoked by only a control device with a Basic/Admin (or only an Admin) level, which means that an untrustful control device with a Public level cannot request the controlled device to start the exclusive mode, thereby preventing the controlled device from being monopolized by an illegal control device.
(2) An exclusive mode that is requested to be started by a control device with a Basic level may be stopped by a control device with an Admin level, or a control device with an Admin level may control a monopolized controlled device normally no matter whether the exclusive mode is enabled.
(3) An exclusive mode that is requested to be started by a control device with an Admin level cannot be stopped by a control device with a Basic level, and can be stopped by only the control device with the Admin level or be cancelled automatically when an exclusive condition is no longer satisfied.

With the device control method in this embodiment of the present invention, reliability and efficiency of a continuous operation and a major operation that are performed by an exclusive control device on a controlled device may be ensured, thereby avoiding possible interference with the major operation on the controlled device when multiple control devices perform control simultaneously; and in addition, security of each interface of the controlled device may be further ensured.

It should be noted that in this embodiment of the present invention, the exclusive control request that is sent by the control device to the controlled device may be implemented in multiple manners, which are described in detail in the following by using examples.

### 1. The exclusive control request is implemented through a control command

For example, an exclusive mode command SetMonopolizationMode() may be set. Parameters of this command are shown in Table 1 in the following.

**Table 1**

| **Argument** | **Direction** | **relatedStateVariable** |
|---|---|---|
| Enable | IN | MonopolizationEnable |
| Mode | IN | MonopolizationMode |
| Policy | IN | MonopolizationPolicy |

Each parameter in Table 1 is defined as follows:
(1) Enable parameter (Boolean): When a value of this parameter is 1, the controlled device is instructed to enable an exclusive mode; and when the value of this parameter is 0, the controlled device is instructed to stop the exclusive mode. This parameter is not mandatory, that is, a control command for stopping the exclusive mode may be defined additionally, for example, StopMonopolization().
(2) Mode parameter (String): This parameter is used to set an exclusive condition. Optional values include Duration (duration), Times (times), and Hybrid (hybrid). Specific examples of these values are as follows:
   Duration=30s, indicating that the controlled device are required to be monopolized within 30 seconds.
   Times=6, indicating that the controlled device are required to be monopolized within six subsequent access requests.
   Hybrid=30s, 6, indicating that exclusive of the controlled device is automatically canceled only when both the duration and the times are satisfied or that exclusive of the controlled device is automatically canceled after one of the duration and the times is satisfied.
(3) Policy parameter (String): This parameter is used to set an exclusive policy and is an optional parameter. Specific examples of values of this parameter are as follows:
   MonopolizedInterfaces=Reboot FactoryReset FirmwareUpgrade, indicating that listed interfaces are forbidden to be accessed by a non-exclusive control device in an exclusive period, and while other interfaces may be normally accessed by an exclusive control device and the non-control device.

FreeInterfaces=GetStatus GetValues, indicating that listed interfaces may be normally accessed by an exclusive control device and a non-control device in an exclusive period, and while other interfaces cannot be accessed by a non-exclusive control device.

In addition, a state variable corresponding to the foregoing one or multiple parameters may be set that an event is generated in the case of a change, for example:
When a value of MonopolizationEnable is changed from 0 to 1 due to a control command that is sent by the control device to the controlled device, the controlled device may send a unicast event to a control device that subscribes to an event, where the unicast event carries a latest value of a changed state variable, so that another control device may obtain the message; or the controlled device sends a multicast event to a specified multicast address, where the multicast event carries a latest value of a changed state variable. In this way, any control device may obtain the message by listening in a multicast port, and then decides whether to send a control command to the controlled device.

### 2. The exclusive control request is implemented through a data model

Several nodes and parameters may be defined through a data model of a device, so as to reflect a functional component, information, and a configuration state of the device in a tree structure. For example, the following data model segments reflect the information of the device, including a device name, a software version, and provider information, and so on:
Device/DeviceInfo/
FriendlyName
ProvisioningCode
Software Version
SoftwareDescription

In this embodiment of the present invention, a corresponding parameter in the data model may be set through a universal interface for setting a data model, so as to request the controlled device to start or cancel an exclusive mode.

For example, a node is defined in the data model of the device, and is used to describe information of the exclusive mode, for example:
Devcie/Monopolization/
Enable
Mode
Policy

For values of Enable, Mode, and Policy parameters, reference may be made to the foregoing description.

The control device may set these parameter values through a universal interface for setting a data model, for example, SetValues(), so as to start or cancel the exclusive mode, and may further set information such as an exclusive condition.

In addition, the control device may further query, through a universal interface for reading a data model, for example, GetValues(), whether a current controlled device is in an exclusive mode.

Definitely, the foregoing descriptions are only examples of specific implementation manners of the exclusive control request that is sent by the control device to the controlled device. The embodiments of the present invention are not limited to the foregoing two manners, and other similar implementation manners may also be available, for example, a combination of the two, that is, the control device sets an exclusive condition by operating a data model of the controlled device, and then instructs, through an exclusive mode, the controlled device to start an exclusive model that uses the foregoing exclusive condition, which are not exemplified one by one.

Persons of ordinary skill in the art may understand that all or a part of the steps in the method according to the foregoing embodiments may be implemented by a program instructing relevant hardware. The program may be stored in a computer readable storage medium, such as a ROM/RAM, a magnetic disk, and an optical disk.

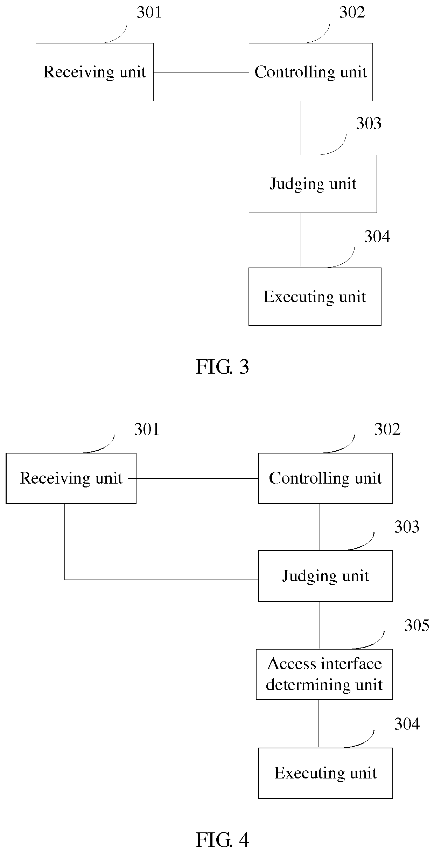

Accordingly, an embodiment of the present invention further provides a network device. FIG. 3 is a schematic structural diagram of the network device.

In this embodiment, the network device includes a receiving unit 301, a controlling unit 302, and a responding unit 303, where:
the receiving unit 301 is configured to receive a request for exclusive control and an access request;
the controlling unit 302 is configured to: after the receiving unit 301 receives a request for exclusive control from a first control device, control the network device to enter an exclusive mode;
a judging unit 303 is configured to: within valid time of the exclusive mode, after the receiving unit 301 receives a first access request, judge whether the first access request is an access request sent by the first control device; and
an executing unit 304 is configured to: when a judgment result of the judging unit 303 is that the first access request is an access request sent by the first control device, execute the first access request; and otherwise, determine, according to an exclusive condition, whether to execute the first access request, or directly reject or discard the first access request.

In this embodiment of the present invention, the exclusive condition may be a preset exclusive condition that corresponds to the first control device, for example, the exclusive condition is stored in the network device.

In addition, the receiving unit is further configured to receive exclusion condition information, for example, the control device may carry exclusion condition information in the exclusive control request, or the control device may also set an exclusive condition through one or multiple exclusive control commands. In this way, different exclusive conditions may be set for different control devices, so that differentiated services may be provided for different control devices. Therefore, the network device may further include: an exclusive condition determining unit (which is not shown in the figure), configured to determine the exclusive condition according to the exclusion condition information.

In this embodiment of the present invention, multiple different manners may be used to determine whether the exclusive mode is within the valid time. For example:
In a network device embodiment of the present invention, the network device further includes a first time determining unit or a second time determining unit, where:
the first time determining unit is configured to determine the valid time of the exclusive mode according to a preset relationship between the first control device and exclusive valid time; or
the second time determining unit is configured to determine the valid time according to exclusive time information carried in the control request.

In a network device embodiment of the present invention, the network device further includes a third time determining unit or a fourth time determining unit, where:
the third time determining unit is configured to: determine the number of continuous exclusive access requests of the first control device according to a preset relationship between the first device and information of the number of continuous access requests; and if the recorded number of access requests of the first control device in the exclusive mode is smaller than the number of continuous exclusive access requests, determine that the exclusive mode is within the valid time; or
the fourth time determining unit is configured to: determine a threshold of the number of exclusive access requests of the first control device according to threshold information of the number of requests, where the threshold information of the number of requests is carried in the control request; and if the recorded number of access requests of the first control device in the exclusive mode is smaller than the threshold of the number of exclusive access requests, determine that the exclusive mode is within the valid time.

In a network device embodiment of the present invention, the network device further includes a fifth time determining unit or a sixth time determining unit, where:
the fifth time determining unit is configured to: determine first time according to a preset relationship between the first control device and exclusive valid time, and determine the number of continuous exclusive access requests of the first control device according to a preset relationship between the first control device and information of the number of continuous access requests; and if current time is within the first time and the recorded number of access requests of the first control device in the exclusive mode is smaller than the number of continuous exclusive access requests, determine that the exclusive mode is within the valid time; or
the sixth time determining unit is configured to: determine second time according to exclusive time information that is carried in the control request; determine a threshold of the number of exclusive access requests of the first control device according to threshold information of the number of requests, where the threshold information of the number of requests is carried in the control request; and if current time is within the second time and the recorded number of access requests of the first control device in the exclusive mode is smaller than the threshold of the number of exclusive access requests, determine that the exclusive mode is within the valid time.

With the network device in this embodiment of the present invention, which control device may temporarily monopolize the network device is determined according to a request for exclusive control of a control device; within valid time of an exclusive mode, an access request of an exclusive control device is normally executed, but whether to execute an access request from another control device is determined according to an exclusive condition, or the access request from the another control device is directly rejected or discarded. In this way, reliability and efficiency of a continuous operation and a major operation that are performed by the exclusive control device on the network device are ensured, thereby avoiding possible interference with the major operation on the network device when multiple control devices perform control simultaneously.

In another network device embodiment of the present invention, the network device may further include an updating unit (which is not shown in the figure), configured to: within the valid time of the exclusive mode, if the first access request is an access request sent by the first control device, update a valid period of the exclusive mode. In this way, an operation that is performed by an exclusive control device on the network device may be fully ensured.

FIG. 4 is another schematic structural diagram of a network device according to an embodiment of the present invention.

This embodiment is different from the embodiment shown in FIG. 3 in that in this embodiment, the exclusion condition information includes exclusive access interface information and the network device further includes:
an access interface determining unit 305, configured to: determine an interface that is requested to be accessed by the first access request, and notify the executing unit 304 of a determining result.

Accordingly, the executing unit 304 includes an exclusive executing subunit and a condition executing subunit, where:
the exclusive executing subunit is configured to: when a judgment result of the judging unit 303 is that the first access request is an access request sent by the first control device, execute the first access request; and
the condition executing subunit is configured to: when the judgment result of the judging unit 303 is that the first access request is not an access request sent by the first control device and the determining result of the access interface determining unit 305 is that the interface that is requested to be accessed by the first access request is included in the exclusive access interface information, execute the first access request; and otherwise, reject the first access request; or when the judgment result of the judging unit 303 is that the first access request is not an access request sent by the first control device and the determining result of the access interface determining unit 305 is that the interface that is requested to be accessed by the first access request is included in the exclusive access interface information, reject the first access request; and otherwise, execute the first access request.

With the network device in this embodiment of the present invention, reliability and efficiency of a continuous operation and a major operation that are performed by an exclusive control device on the network device may be ensured, thereby avoiding possible interference with the major operation on the network device when multiple control devices perform control simultaneously; and in addition, security of each interface of the network device may further be ensured.

Optionally, in the embodiments shown in FIG. 3 and FIG. 4, the exclusion condition information may further include an information set or a specified level of a control device. Accordingly, when determining, according to an exclusive condition, whether to execute the first access request, the executing unit 304 executes the first access request if the first access request is an access request sent by a second control device and the second control device is included in the information set or a level of the second control device is the specified level.

Optionally, in the embodiments shown in FIG. 3 and FIG. 4, when determining, according to an exclusive condition, whether to execute the first access request, the executing unit 304 may also perform execution according to the following manner: If the first access request is an access request sent by a second control device and a level of the second control device is higher than a level of the first control device, execute the first access request.

Optionally, in the embodiments shown in FIG. 3 and FIG. 4, when determining, according to an exclusive condition, whether to execute the first access request, the executing unit 304 may reject an access request from another control device, or postpone executing the access request from the another control device, or discard the access request from the another control device.

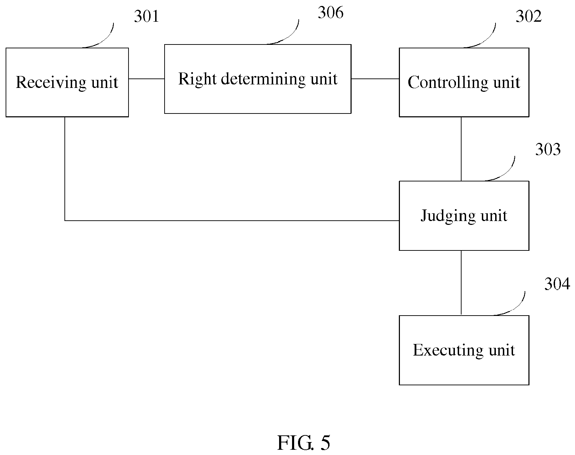

FIG. 5 is another schematic structural diagram of a network device according to an embodiment of the present invention.

This embodiment is different from the embodiment shown in FIG. 3 in that in this embodiment, each control device corresponds to one access level. Accordingly, the network device may further include:
a right determining unit 306, configured to: before the controlling unit 302 controls the network device to enter an exclusive mode, determine, according to an access level of the first control device, whether the access level of the first control device has an exclusive right, and if yes, instruct the controlling unit 302 to control the network device to enter the exclusive mode.

It should be noted that the right determining unit 306 may also be applied in the embodiment shown in FIG. 4.

In the foregoing embodiments, the receiving unit 302 may further be configured to receive an exclusive mode cancellation request.

Accordingly, the judging unit 303 is further configured to: within the valid time of the exclusive mode, judge whether the exclusive mode cancellation request is a request sent by the first control device or a request sent by a control device whose level is higher than a level of the first control device. The executing unit 304 is further configured to: after the judging unit 303 judges that the exclusive mode request is a request sent by the first control device or a request sent by a control device whose level is higher than a level of the first control device, cancel the exclusive mode.

With the network device in this embodiment of the present invention, reliability and efficiency of a continuous operation and a major operation that are performed by an exclusive control device on the network device may be ensured, thereby avoiding possible interference with the major operation on the network device when multiple control devices perform control simultaneously; and in addition, whether an access level of a first control device has an exclusive right is determined, which further ensures security of the network device.

Accordingly, an embodiment of the present invention further provides a network system. The system includes a controlled device and a first control device, where:
the first control device is configured to send a request for exclusive control and an access request to the controlled device; and
the controlled device is configured to: receive the exclusive control request from the first control device and enter an exclusive mode; receive a first access request, and within valid time of the exclusive mode, judge whether the first access request is an access request sent by the first control device; if yes, execute the first access request; and otherwise, determine, according to an exclusive condition, whether to execute the first access request, or directly reject or discard the first access request.

In this embodiment of the present invention, the exclusive condition may be a preset exclusive condition that corresponds to the first control device.

In another embodiment of the present invention, the exclusive condition is sent by the first control device to the controlled device, for example, exclusion condition information is carried in the sent exclusive control request, or an exclusive condition may also be set through one or multiple exclusive control commands first. In this way, different exclusive conditions may be set for different control devices, so that differentiated services may be provided for different control devices.

Accordingly, the controlled device is further configured to: receive exclusion condition information and determine the exclusive condition according to the exclusion condition information.

With the network system in this embodiment of the present invention, reliability and efficiency of a continuous operation and a major operation that are performed by an exclusive first control device on a controlled device may be ensured, thereby avoiding possible interference with the major operation on the controlled device when multiple control devices perform control simultaneously.

The embodiments of the present invention are described in detail in the foregoing. Although the present invention is described with reference to specific implementation manners, the description of the embodiments is only intended to help understand the method and device of the present invention. Therefore, content of the specification shall not be construed as a limitation on the present invention.

## Claims

1. A device control method, comprising:
receiving (101) a request for exclusive control from a first control device, and entering an exclusive mode;
receiving (102) a first access request;
within valid time of the exclusive mode, judging (103) whether the first access request is an access request sent by the first control device;
if yes, executing (104) the first access request; and otherwise, directly rejecting or discarding (105) the first access request; and
receiving a second access request from a second control device;
the method **characterized in that** the request for exclusive control from the first control device comprises exclusion condition information including exclusive access interface information; and **in that** the method further comprises:
determining an interface requested to be accessed by the second access request; and
in the case where the exclusive access interface information indicates an interface that is allowed to be accessed, executing the second access request in the event the interface is included in the exclusive access interface information, or rejecting the second access request in the event the interface is not included in the exclusive access interface information;
or
in the case where the exclusive access interface information indicates an interface that is forbidden to be accessed, rejecting the second access request in the event the interface is included in the exclusive access interface information, or allowing the second access request in the event the interface is not included in the exclusive access interface information.

2. The method according to claim 1, further comprising:
carrying exclusive time information in the request for exclusive control, and determining the valid time according to the exclusive time information.

3. The method according to claim 1 or 2, further comprising:
within the valid time of the exclusive mode, if the first access request is an access request sent by the first control device, updating a valid period of the exclusive mode.

4. The method according to any one of claims 1 to 3, wherein each control device corresponds to one access level; and the method further comprises:
before entering the exclusive mode, determining, according to an access level of the first control device, whether the access level of the first control device has an exclusive right; and, if yes, entering the exclusive mode.

5. The method according to any one of claims 1 to 4, further comprising:
receiving an exclusive mode cancellation request; and
if the exclusive mode cancellation request is a request sent by the first control device or a request sent by a control device whose access level is higher than an access level of the first control device, canceling the exclusive mode.

6. A network device, comprising:
a receiving unit, configured to receive a request for exclusive control and an access request;
a controlling unit, configured to: after the receiving unit receives a request for exclusive control from a first control device, control the network device to enter an exclusive mode;
a judging unit, configured to: within valid time of the exclusive mode, after the receiving unit receives a first access request, judge whether the first access request is an access request sent by the first control device; and
an executing unit, configured to: when a judgment result of the judging unit is that the first access request is an access request sent by the first control device, execute the first access request; and otherwise, directly reject or discard the first access request;
the network device **characterized in that** the request for exclusive control comprises exclusion condition information including exclusive access interface information, and **in that** the controlling unit is further configured to:
determine an interface requested to be accessed by a second access request received by the receiving unit from a second control device; and
in the case where the exclusive access interface information indicates an interface that is allowed to be accessed, execute the second access request in the event the interface is included in the exclusive access interface information, or reject the second access request in the event the interface is not included in the exclusive access interface information;
or
in the case where the exclusive access interface information indicates an interface that is forbidden to be accessed, reject the second access request in the event the interface is included in the exclusive access interface information, or allow the second access request in the event the interface is not included in the exclusive access interface information.

7. The network device according to claim 6, further comprising:
a first time determining unit, configured to determine the valid time according to exclusive time information carried in the control request.

8. The network device according to claim 6 or 7, further comprising:
an updating unit, configured to: within the valid time of the exclusive mode, if the first access request is an access request sent by the first control device, update a valid period of the exclusive mode.

9. The network device according to any one of claims 6 to 8, further comprising:
a right determining unit, configured to: before the controlling unit controls the network device to enter an exclusive mode, determine, according to an access level of the first control device, whether the access level of the first control device has an exclusive right; and if yes, instruct the controlling unit to control the network device to enter the exclusive mode.

10. The network device according to any one of claims 6 to 9, wherein:
the receiving unit is further configured to receive an exclusive mode cancellation request;
the judging unit is further configured to: within the valid time of the exclusive mode, judge whether the exclusive mode cancellation request is a request sent by the first control device or a request sent by a control device whose level is higher than a level of the first control device; and
the executing unit is further configured to after the judging unit judges that the exclusive mode request is a request sent by the first control device or a request sent by a control device whose level is higher than a level of the first control device, cancel the exclusive mode.

11. A network system, comprising a controlled device, a first control device and a second control device, wherein:
the first control device is configured to send a request for exclusive control and an access request to the controlled device; and
the controlled device is configured to: receive the exclusive control request from the first control device and enter an exclusive mode; receive a first access request, and within valid time of the exclusive mode, judge whether the first access request is an access request sent by the first control device; and if yes, execute the first access request; and otherwise directly reject or discard the first access request;
the network system **characterized in that** the request for exclusive control comprises exclusion condition information including exclusive access interface information, and **in that** the network system is further configured to:
determine an interface requested to be accessed by a second access request received by the receiving unit from the second control device; and
in the case where the exclusive access interface information indicates an interface that is allowed to be accessed, execute the second access request in the event the interface is included in the exclusive access interface information, or reject the second access request in the event the interface is not included in the exclusive access interface information;
or
in the case where the exclusive access interface information indicates an interface that is forbidden to be accessed, reject the second access request in the event the interface is included in the exclusive access interface information, or allow the second access request in the event the interface is not included in the exclusive access interface information.

12. A network device, comprising:
a receiving unit, configured to receive a request for exclusive control and an access request from a first control device and a second access request from a second control device;
a controlling unit, configured to: after the receiving unit receives a request for exclusive control from a first control device, control the network device to enter an exclusive mode;
a judging unit, configured to: within valid time of the exclusive mode, after the receiving unit receives a first access request, judge whether the first access request is an access request sent by the first control device;
an executing unit, configured to: when a judgment result of the judging unit is that the first access request is an access request sent by the first control device, execute the first access request; and otherwise, determine, according to an exclusive condition, whether to execute the first access request;
the network device **characterised in that**:
the request for exclusive control from the first control device comprises exclusion condition information including exclusive access interface information; and **in that** the network device is further configured to:
determine an interface requested to be accessed by the second access request; and
in the case where the exclusive access interface information indicates an interface that is allowed to be accessed, execute the second access request in the event the interface is included in the exclusive access interface information, or reject the second access request in the event the interface is not included in the exclusive access interface information;
or
in the case where the exclusive access interface information indicates an interface that is forbidden to be accessed, reject the second access request in the event the interface is included in the exclusive access interface information, or allow the second access request in the event the interface is not included in the exclusive access interface information.

13. The network device according to claim 12, wherein the exclusive condition is a preset exclusive condition that corresponds to the first control device; or
the receiving unit is further configured to receive exclusion condition information; and the network device further comprises:
an exclusive condition determining unit, configured to determine the exclusive condition according to the exclusion condition information.

14. The network device according to claim 12 or claim 13, wherein the exclusion condition information comprises a specified access level of a control device; and
when determining, according to the exclusive condition, whether to execute the first access request, the executing unit executes the first access request if the first access request is an access request sent by a second control device and an access level of the second control device is the specified access level

15. The network device according to any one of claims 12 to 14, wherein:
when determining, according to the exclusive condition, whether to execute the first access request, the executing unit executes the first access request if the first access request is an access request sent by a second control device and an access level of the second control device is higher than an access level of the first control device.

## Patentansprüche

1. Verfahren zur Steuerung einer Vorrichtung, umfassend:
Empfangen (101) einer Anforderung zur Exklusivsteuerung von einer ersten Steuervorrichtung, und Eintreten in einen Exklusivmodus;
Empfangen (102) einer ersten Zugangsanforderung;
innerhalb eines Gültigkeitszeitraums des Exklusivmodus, Beurteilen (103), ob die erste Zugangsanforderung eine Zugangsanforderung ist, die durch die erste Steuervorrichtung gesendet wurde;
wenn ja, Ausführen (104) der ersten Zugangsanforderung; und andernfalls direktes Zurückweisen oder Verwerfen (105) der ersten Zugangsanforderung; und
Empfangen einer zweiten Zugangsanforderung von einer zweiten Steuervorrichtung;
wobei das Verfahren **dadurch gekennzeichnet ist, dass** die Anforderung zur Exklusivsteuerung von der ersten Steuervorrichtung eine Exklusionsbedingungsinformation umfasst, die eine Exklusivzugang-Schnittstelleninformation umfasst; und dadurch, dass das Verfahren ferner umfasst:
Bestimmen einer Schnittstelle, für die durch die zweite Zugangsanforderung ein Zugang angefordert wird; und
falls die Exklusivzugang-Schnittstelleninformation eine Schnittstelle anzeigt, zu der ein Zugang zulässig ist, Ausführen der zweiten Zugangsanforderung in dem Fall, dass die Schnittstelle in der Exklusivzugang-Schnittstelleninformation enthalten ist, oder Zurückweisen der zweiten Zugangsanforderung in dem Fall, dass die Schnittstelle nicht in der Exklusivzugang-Schnittstelleninformation enthalten ist;
oder
falls die Exklusivzugang-Schnittstelleninformation eine Schnittstelle anzeigt, zu der ein Zugang unzulässig ist, Zurückweisen der zweiten Zugangsanforderung in dem Fall, dass die Schnittstelle in der Exklusivzugang-Schnittstelleninformation enthalten ist, oder Zulassen der zweiten Zugangsanforderung in dem Fall, dass die Schnittstelle nicht in der Exklusivzugang-Schnittstelleninformation enthalten ist.

2. Verfahren nach Anspruch 1, ferner umfassend:
Mitführen einer Exklusivzeitinformation in der Anforderung zur Exklusivsteuerung, und Bestimmen des Gültigkeitszeitraums gemäß der Exklusivzeitinformation.

3. Verfahren nach Anspruch 1 oder 2, ferner umfassend:
innerhalb des Gültigkeitszeitraums des Exklusivmodus, wenn die erste Zugangsanforderung eine Zugangsanforderung ist, die durch die erste Steuervorrichtung gesendet wurde, Aktualisieren einer Gültigkeitsdauer des Exklusivmodus.

4. Verfahren nach einem der Ansprüche 1 bis 3, wobei jede Steuervorrichtung einer Zugangsebene entspricht; und wobei das Verfahren ferner umfasst:
vor Eintreten in den Exklusivmodus, Bestimmen, gemäß einer Zugangsebene der ersten Steuervorrichtung, ob die Zugangsebene der ersten Steuervorrichtung ein Exklusivrecht hat; und wenn ja, Eintreten in den Exklusivmodus.

5. Verfahren nach einem der Ansprüche 1 bis 4, ferner umfassend:
Empfangen einer Exklusivmodus-Abbruchanforderung; und
wenn die Exklusivmodus-Abbruchanforderung eine Anforderung ist, die durch die erste Steuervorrichtung gesendet wurde, oder eine Anforderung ist, die durch eine Steuervorrichtung gesendet wurde, deren Zugangsebene höher als eine Zugangsebene der ersten Steuervorrichtung ist, Abbrechen des Exklusivmodus.

6. Netzwerkvorrichtung, umfassend:
eine Empfangseinheit, die ausgelegt ist, eine Anforderung zur Exklusivsteuerung und eine Zugangsanforderung zu empfangen;
eine Steuereinheit, die zu Folgendem ausgelegt ist: nachdem die Empfangseinheit eine Anforderung für eine Exklusivsteuerung von einer ersten Steuervorrichtung empfängt, Steuern der Netzwerkvorrichtung, in einen Exklusivmodus einzutreten;
eine Beurteilungseinheit, die zu Folgendem ausgelegt ist: innerhalb eines Gültigkeitszeitraums des Exklusivmodus, nachdem die Empfangseinheit eine erste Zugangsanforderung empfängt, Beurteilen, ob die erste Zugangsanforderung eine Zugangsanforderung ist, die durch die erste Steuervorrichtung gesendet wurde; und
eine Ausführungseinheit, die zu Folgendem ausgelegt ist: wenn ein Beurteilungsergebnis der Beurteilungseinheit lautet, dass die erste Zugangsanforderung eine Zugangsanforderung ist, die durch die erste Steuervorrichtung gesendet wurde, Ausführen der ersten Zugangsanforderung; und andernfalls direktes Zurückweisen oder Verwerfen der ersten Zugangs anforderung;
wobei die Netzwerkvorrichtung **dadurch gekennzeichnet ist, dass** die Anforderung zur Exklusivsteuerung eine Exklusionsbedingungsinformation umfasst, die eine Exklusivzugang-Schnittstelleninformation umfasst, und dadurch, dass die Steuereinheit ferner zu Folgendem ausgelegt ist:
Bestimmen einer Schnittstelle, für die durch eine zweite Zugangsanforderung, die durch die Empfangseinheit von einer zweiten Steuervorrichtung empfangen wurde, ein Zugang angefordert wird; und
falls die Exklusivzugang-Schnittstelleninformation eine Schnittstelle anzeigt, zu der ein Zugang zulässig ist, Ausführen der zweiten Zugangsanforderung in dem Fall, dass die Schnittstelle in der Exklusivzugang-Schnittstelleninformation enthalten ist, oder Zurückweisen der zweiten Zugangsanforderung in dem Fall, dass die Schnittstelle nicht in der Exklusivzugang-Schnittstelleninformation enthalten ist;
oder
falls die Exklusivzugang-Schnittstelleninformation eine Schnittstelle anzeigt, zu der ein Zugang unzulässig ist, Zurückweisen der zweiten Zugangsanforderung in dem Fall, dass die Schnittstelle in der Exklusivzugang-Schnittstelleninformation enthalten ist, oder Zulassen der zweiten Zugangsanforderung in dem Fall, dass die Schnittstelle nicht in der Exklusivzugang-Schnittstelleninformation enthalten ist.

7. Netzwerkvorrichtung nach Anspruch 6, ferner umfassend:
eine erste Zeitbestimmungseinheit, die ausgelegt ist, den Gültigkeitszeitraum gemäß einer in der Steuerungsanforderung mitgeführten Exklusivzeitinformation zu bestimmen.

8. Netzwerkvorrichtung nach Anspruch 6 oder 7, ferner umfassend:
eine Aktualisierungseinheit, die zu Folgendem ausgelegt ist: innerhalb des Gültigkeitszeitraums des Exklusivmodus, wenn die erste Zugangsanforderung eine Zugangsanforderung ist, die durch die erste Steuervorrichtung gesendet wurde, Aktualisieren einer Gültigkeitsdauer des Exklusivmodus.

9. Netzwerkeinrichtung nach einem der Ansprüche 6 bis 8, ferner umfassend:
eine Rechtebestimmungseinheit, die zu Folgendem ausgelegt ist: bevor die Steuereinheit die Netzwerkvorrichtung steuert, in einen Exklusivmodus einzutreten, Bestimmen, gemäß einer Zugangsebene der ersten Steuervorrichtung, ob die Zugangsebene der ersten Steuervorrichtung ein Exklusivrecht hat; und wenn ja, Anweisen der Steuereinheit, die Netzwerkvorrichtung zu steuern, in den Exklusivmodus einzutreten.

10. Netzwerkvorrichtung nach einem der Ansprüche 6 bis 9, wobei:
die Empfangseinheit ferner ausgelegt ist, eine Exklusivmodus-Abbruchanforderung zu empfangen;
die Beurteilungseinheit ferner zu Folgendem ausgelegt ist: innerhalb des Gültigkeitszeitraums des Exklusivmodus, Beurteilen, ob die Exklusivmodus-Abbruchanforderung eine Anforderung ist, die durch die erste Steuervorrichtung gesendet wurde, oder eine Anforderung ist, die durch eine Steuervorrichtung gesendet wurde, deren Ebene höher als eine Ebene der ersten Steuervorrichtung ist; und
die Ausführungseinheit ferner zu Folgendem ausgelegt ist: nachdem die Beurteilungseinheit beurteilt, dass die Exklusivmodusanforderung eine Anforderung ist, die durch die erste Steuervorrichtung gesendet wurde, oder eine Anforderung ist, die durch eine Steuervorrichtung gesendet wurde, deren Ebene höher als eine Ebene der ersten Steuervorrichtung ist, Abbrechen des Exklusivmodus.

11. Netzwerksystem, umfassend eine gesteuerte Vorrichtung, eine erste Steuervorrichtung und eine zweite Steuervorrichtung, wobei:
die erste Steuervorrichtung ausgelegt ist, eine Anforderung für eine Exklusivsteuerung und eine Zugangsanforderung an die gesteuerte Vorrichtung zu senden; und
die gesteuerte Vorrichtung zu Folgendem ausgelegt ist: Empfangen der Exklusivsteuerungsanforderung von der ersten Steuervorrichtung und Eintreten in einen Exklusivmodus; Empfangen einer ersten Zugangsanforderung, und innerhalb eines Gültigkeitszeitraums des Exklusivmodus, Beurteilen, ob die erste Zugangsanforderung eine Zugangsanforderung ist, die durch die erste Steuervorrichtung gesendet wurde; und wenn ja, Ausführen der ersten Zugangsanforderung; und andernfalls direktes Zurückweisen oder Verwerfen der ersten Zugangsanforderung;
das Netzwerksystem **dadurch gekennzeichnet ist, dass** die Anforderung zur Exklusivsteuerung eine Exklusionsbedingungsinformation umfasst, die eine Exklusivzugang-Schnittstelleninformation umfasst, und dadurch, dass das Netzwerksystem ferner zu Folgendem ausgelegt ist:
Bestimmen einer Schnittstelle, für die durch eine zweite Zugangsanforderung, die durch die Empfangseinheit von der zweiten Steuervorrichtung empfangen wurde, ein Zugang angefordert wird; und
falls die Exklusivzugang-Schnittstelleninformation eine Schnittstelle anzeigt, zu der ein Zugang zulässig ist, Ausführen der zweiten Zugangsanforderung in dem Fall, dass die Schnittstelle in der Exklusivzugang-Schnittstelleninformation enthalten ist, oder Zurückweisen der zweiten Zugangsanforderung in dem Fall, dass die Schnittstelle nicht in der Exklusivzugang-Schnittstelleninformation enthalten ist;
oder
falls die Exklusivzugang-Schnittstelleninformation eine Schnittstelle anzeigt, zu der ein Zugang unzulässig ist, Zurückweisen der zweiten Zugangsanforderung in dem Fall, dass die Schnittstelle in der Exklusivzugang-Schnittstelleninformation enthalten ist, oder Zulassen der zweiten Zugangsanforderung in dem Fall, dass die Schnittstelle nicht in der Exklusivzugang-Schnittstelleninformation enthalten ist.

12. Netzwerkvorrichtung, umfassend:
eine Empfangseinheit, die ausgelegt ist, eine Anforderung zur Exklusivsteuerung und eine Zugangsanforderung von einer ersten Steuervorrichtung und eine zweite Zugangsanforderung von einer zweiten Steuervorrichtung zu empfangen;
eine Steuereinheit, die zu Folgendem ausgelegt ist: nachdem die Empfangseinheit eine Anforderung zur Exklusivsteuerung von einer ersten Steuervorrichtung empfängt, Steuern der Netzwerkvorrichtung, in einen Exklusivmodus einzutreten;
eine Beurteilungseinheit, die zu Folgendem ausgelegt ist: innerhalb eines Gültigkeitszeitraums des Exklusivmodus, nachdem die Empfangseinheit eine erste Zugangsanforderung empfängt, Beurteilen, ob die erste Zugangsanforderung eine Zugangsanforderung ist, die durch die erste Steuervorrichtung gesendet wurde;
eine Ausführungseinheit, die zu Folgendem ausgelegt ist: wenn ein Beurteilungsergebnis der Beurteilungseinheit lautet, dass die erste Zugangsanforderung eine Zugangsanforderung ist, die durch die erste Steuervorrichtung gesendet wurde, Ausführen der ersten Zugangsanforderung; und
andernfalls Bestimmen, gemäß einer Exklusivbedingung, ob die erste Zugangsanforderung ausgeführt werden soll;
wobei die Netzwerkvorrichtung **dadurch gekennzeichnet ist, dass**:
die Anforderung zur Exklusivsteuerung von der ersten Steuervorrichtung eine Exklusionsbedingungsinformation umfasst, die eine Exklusivzugang-Schnittstelleninformation umfasst; und dadurch, dass die Netzwerkvorrichtung ferner zu Folgendem ausgelegt ist:
Bestimmen einer Schnittstelle, für die durch die zweite Zugangsanforderung ein Zugang angefordert wird; und
falls die Exklusivzugang-Schnittstelleninformation eine Schnittstelle anzeigt, zu der ein Zugang zulässig ist, Ausführen der zweiten Zugangsanforderung in dem Fall, dass die Schnittstelle in der Exklusivzugang-Schnittstelleninformation enthalten ist, oder Zurückweisen der zweiten Zugangsanforderung in dem Fall, dass die Schnittstelle nicht in der Exklusivzugang-Schnittstelleninformation enthalten ist;
oder
falls die Exklusivzugang-Schnittstelleninformation eine Schnittstelle anzeigt, zu der ein Zugang unzulässig ist, Zurückweisen der zweiten Zugangsanforderung in dem Fall, dass die Schnittstelle in der Exklusivzugang-Schnittstelleninformation enthalten ist, oder Zulassen der zweiten Zugangsanforderung in dem Fall, dass die Schnittstelle nicht in der Exklusivzugang-Schnittstelleninformation enthalten ist.

13. Netzwerkvorrichtung nach Anspruch 12, wobei die Exklusivbedingung eine voreingestellte Exklusivbedingung ist, die der ersten Steuervorrichtung entspricht;
oder
die Empfangseinheit ferner ausgelegt ist, eine Exklusionsbedingungsinformation zu empfangen; und die Netzwerkvorrichtung ferner umfasst:
eine Exklusivbedingung-Bestimmungseinheit, die ausgelegt ist, die Exklusivbedingung gemäß der Exklusionsbedingungsinformation zu bestimmen.

14. Netzwerkvorrichtung nach Anspruch 12 oder Anspruch 13, wobei die Exklusionsbedingungsinformation eine vorgegebene Zugangsebene einer Steuervorrichtung umfasst; und
wobei bei Bestimmen, gemäß der Exklusivbedingung, ob die erste Zugangsanforderung ausgeführt werden soll, die Ausführungseinheit die erste Zugangsanforderung ausführt, wenn die erste Zugangsanforderung eine Zugangsanforderung ist, die durch eine zweite Steuervorrichtung gesendet wurde, und eine Zugangsebene der zweiten Steuervorrichtung die vorgegebene Zugangsebene ist.

15. Netzwerkvorrichtung nach einem der Ansprüche 12 bis 14, wobei:
bei Bestimmen, gemäß der Exklusivbedingung, ob die erste Zugangsanforderung ausgeführt werden soll, die Ausführungseinheit die erste Zugangsanforderung ausführt, wenn die erste Zugangsanforderung eine Zugangsanforderung ist, die durch eine zweite Steuervorrichtung gesendet wurde, und eine Zugangsebene der zweiten Steuervorrichtung höher als eine Zugangsebene der ersten Steuervorrichtung ist.

## Revendications

1. Procédé de commande de dispositif, comprenant les étapes consistant à :
recevoir (101) une demande de commande d'exclusion en provenance d'un premier dispositif de commande, et entrer dans un mode d'exclusion ;
recevoir (102) une première demande d'accès ;
dans un délai valide du mode d'exclusion, juger (103) si la première demande d'accès est une demande d'accès envoyée par le premier dispositif de commande ;
si oui, exécuter (104) la première demande d'accès ; et sinon, rejeter ou ignorer directement (105) la première demande d'accès ; et
recevoir une seconde demande d'accès en provenance d'un second dispositif de commande ;
le procédé étant **caractérisé en ce que** la demande de commande d'exclusion en provenance du premier dispositif de commande comprend une information de condition d'exclusion incluant une information d'interface d'accès d'exclusion ; et **en ce que** le procédé comprend en outre les étapes consistant à :
déterminer une interface à laquelle l'accès est demandé par la seconde demande d'accès ; et
si l'information d'interface d'accès d'exclusion indique une interface à laquelle l'accès est autorisé, exécuter la seconde demande d'accès si l'interface est incluse dans l'information d'interface d'accès d'exclusion ou rejeter la seconde demande d'accès si l'interface n'est pas incluse dans l'information d'interface d'accès d'exclusion ;
ou
si l'information d'interface d'accès d'exclusion indique une interface à laquelle l'accès est interdit, rejeter la seconde demande d'accès si l'interface est incluse dans l'information d'interface d'accès d'exclusion ou autoriser la seconde demande d'accès si l'interface n'est pas incluse dans l'information d'interface d'accès d'exclusion.

2. Procédé selon la revendication 1, comprenant en outre l'étape consistant à :
transporter une information de délai d'exclusion dans la demande de commande d'exclusion et déterminer le délai valide selon l'information de délai d'exclusion.

3. Procédé selon la revendication 1 ou 2, comprenant en outre l'étape consistant à :
dans le délai valide du mode d'exclusion, si la première demande d'accès est une demande d'accès envoyée par le premier dispositif de commande, mettre à jour une période valide du mode d'exclusion.

4. Procédé selon l'une quelconque des revendications 1 à 3, dans lequel chaque dispositif de commande correspond à un niveau d'accès ; et le procédé comprenant en outre les étapes consistant à :
avant d'entrer dans le mode d'exclusion, déterminer, selon un niveau d'accès du premier dispositif de commande, si le niveau d'accès du premier dispositif de commande a un droit d'exclusion ; et si oui, entrer dans le mode d'exclusion.

5. Procédé selon l'une quelconque des revendications 1 à 4, comprenant en outre les étapes consistant à :
recevoir une demande d'annulation de mode d'exclusion ; et
si la demande d'annulation de mode d'exclusion est une demande envoyée par le premier dispositif de commande ou une demande envoyée par un dispositif de commande dont le niveau d'accès est supérieur à un niveau d'accès du premier dispositif de commande, annuler le mode d'exclusion.

6. Dispositif de réseau, comprenant :
une unité de réception, configurée pour recevoir une demande de commande d'exclusion et une demande d'accès ;
une unité de commande, configurée pour : après que l'unité de réception a reçu une demande de commande d'exclusion en provenance d'un premier dispositif de commande, commander le dispositif de réseau pour qu'il entre dans un mode d'exclusion ;
une unité de jugement, configurée pour : dans un délai valide du mode d'exclusion, après que l'unité de réception a reçu une première demande d'accès, juger si la première demande d'accès est une demande d'accès envoyée par le premier dispositif de commande ; et
une unité d'exécution, configurée pour : quand un résultat de jugement de l'unité de jugement indique que la première demande d'accès est une demande d'accès envoyée par le premier dispositif de commande, exécuter la première demande d'accès ; et sinon, rejeter ou ignorer directement la première demande d'accès ;
le dispositif de réseau étant **caractérisé en ce que** la demande de commande d'exclusion comprend une information de condition d'exclusion incluant une information d'interface d'accès d'exclusion et **en ce que** l'unité de commande est en outre configurée pour :
déterminer une interface à laquelle l'accès est demandé par une seconde demande d'accès reçue par l'unité de réception en provenance d'un second dispositif de commande ; et
si l'information d'interface d'accès d'exclusion indique une interface à laquelle l'accès est autorisé, exécuter la seconde demande d'accès si l'interface est incluse dans l'information d'interface d'accès d'exclusion ou rejeter la seconde demande d'accès si l'interface n'est pas incluse dans l'information d'interface d'accès d'exclusion ;
ou
si l'information d'interface d'accès d'exclusion indique une interface à laquelle l'accès est interdit, rejeter la seconde demande d'accès si l'interface est incluse dans l'information d'interface d'accès d'exclusion ou autoriser la seconde demande d'accès si l'interface n'est pas incluse dans l'information d'interface d'accès d'exclusion.

7. Dispositif de réseau selon la revendication 6, comprenant en outre :
une première unité de détermination, configurée pour déterminer le délai valide selon une information de délai d'exclusion transportée dans la demande de commande.

8. Dispositif de réseau selon la revendication 6 ou 7, comprenant en outre :
une unité de mise à jour, configurée pour : dans le délai valide du mode d'exclusion, si la première demande d'accès est une demande d'accès envoyée par le premier dispositif de commande, mettre à jour une période valide du mode d'exclusion.

9. Dispositif de réseau selon l'une quelconque des revendications 6 à 8, comprenant en outre :
une unité de détermination de droit, configurée pour : avant que l'unité de commande ne commande le dispositif de réseau pour qu'il entre dans un mode d'exclusion, déterminer, selon un niveau d'accès du premier dispositif de commande, si le niveau d'accès du premier dispositif de commande a un droit d'exclusion ; et si oui, donner l'instruction à l'unité de commande de commander le dispositif de réseau pour qu'il entre dans le mode d'exclusion.

10. Dispositif de réseau selon l'une quelconque des revendications 6 à 9, dans lequel :
l'unité de réception est en outre configurée pour recevoir une demande d'annulation de mode d'exclusion ;
l'unité de jugement est en outre configurée pour : dans le délai valide du mode d'exclusion, juger si la demande d'annulation de mode d'exclusion est une demande envoyée par le premier dispositif de commande ou une demande envoyée par un dispositif de commande dont le niveau est supérieur à un niveau du premier dispositif de commande ; et
l'unité d'exécution est en outre configurée pour : après que l'unité de jugement a jugé que la demande de mode d'exclusion est une demande envoyée par le premier dispositif de commande ou une demande envoyée par un dispositif de commande dont le niveau est supérieur à un niveau du premier dispositif de commande, annuler le mode d'exclusion.

11. Système de réseau, comprenant un dispositif commandé, un premier dispositif de commande et un second dispositif de commande,
le premier dispositif de commande étant configuré pour envoyer une demande de commande d'exclusion et une demande d'accès au dispositif commandé ; et
le dispositif commandé étant configuré pour : recevoir la demande de commande d'exclusion en provenance du premier dispositif de commande et entrer dans un mode d'exclusion ; recevoir une première demande d'accès, et dans un délai valide du mode d'exclusion, juger si la première demande d'accès est une demande d'accès envoyée par le premier dispositif de commande ; et si oui, exécuter la première demande d'accès ; et sinon, rejeter ou ignorer directement la première demande d'accès ;
le système de réseau étant **caractérisé en ce que** la demande de commande d'exclusion comprend une information de condition d'exclusion incluant une information d'interface d'accès d'exclusion et **en ce que** le système de réseau est en outre configuré pour :
déterminer une interface à laquelle l'accès est demandé par une seconde demande d'accès reçue par l'unité de réception en provenance du second dispositif de commande ; et
si l'information d'interface d'accès d'exclusion indique une interface à laquelle l'accès est autorisé, exécuter la seconde demande d'accès si l'interface est incluse dans l'information d'interface d'accès d'exclusion ou rejeter la seconde demande d'accès si l'interface n'est pas incluse dans l'information d'interface d'accès d'exclusion ;
ou
si l'information d'interface d'accès d'exclusion indique une interface à laquelle l'accès est interdit, rejeter la seconde demande d'accès si l'interface est incluse dans l'information d'interface d'accès d'exclusion ou autoriser la seconde demande d'accès si l'interface n'est pas incluse dans l'information d'interface d'accès d'exclusion.

12. Dispositif de réseau, comprenant :
une unité de réception, configurée pour recevoir une demande de commande d'exclusion et une demande d'accès en provenance d'un premier dispositif de commande et une seconde demande d'accès en provenance d'un second dispositif de commande ;
une unité de commande, configurée pour : après que l'unité de réception a reçu une demande de commande d'exclusion en provenance d'un premier dispositif de commande, commander le dispositif de réseau pour qu'il entre dans un mode d'exclusion ;
une unité de jugement, configurée pour : dans un délai valide du mode d'exclusion, après que l'unité de réception a reçu une première demande d'accès, juger si la première demande d'accès est une demande d'accès envoyée par le premier dispositif de commande ;
une unité d'exécution, configurée pour : quand un résultat de jugement de l'unité de jugement indique que la première demande d'accès est une demande d'accès envoyée par le premier dispositif de commande, exécuter la première demande d'accès ; et sinon, déterminer, selon une condition d'exclusion, s'il faut exécuter la première demande d'accès ;
le dispositif de réseau étant **caractérisé en ce que** :
la demande de commande d'exclusion en provenance du premier dispositif de commande comprend une information de condition d'exclusion incluant une information d'interface d'accès d'exclusion ; et **en ce que** le dispositif de réseau est en outre configuré pour :
déterminer une interface à laquelle l'accès est demandé par la seconde demande d'accès ; et
si l'information d'interface d'accès d'exclusion indique une interface à laquelle l'accès est autorisé, exécuter la seconde demande d'accès si l'interface est incluse dans l'information d'interface d'accès d'exclusion ou rejeter la seconde demande d'accès si l'interface n'est pas incluse dans l'information d'interface d'accès d'exclusion ;
ou
si l'information d'interface d'accès d'exclusion indique une interface à laquelle l'accès est interdit, rejeter la seconde demande d'accès si l'interface est incluse dans l'information d'interface d'accès d'exclusion ou autoriser la seconde demande d'accès si l'interface n'est pas incluse dans l'information d'interface d'accès d'exclusion.

13. Dispositif de réseau selon la revendication 12, dans lequel la condition d'exclusion est une condition d'exclusion prédéfinie qui correspond au premier dispositif de commande ; ou
l'unité de réception est en outre configurée pour recevoir une information de condition d'exclusion ; et le dispositif de réseau comprend en outre :
une unité de détermination de condition d'exclusion, configurée pour déterminer la condition d'exclusion selon l'information de condition d'exclusion.

14. Dispositif de réseau selon la revendication 12 ou 13, dans lequel l'information de condition d'exclusion comprend un niveau d'accès spécifié d'un dispositif de commande ; et
quand il est déterminé, selon la condition d'exclusion, s'il faut exécuter la première demande d'accès, l'unité d'exécution exécute la première demande d'accès si la première demande d'accès est une demande d'accès envoyée par un second dispositif de commande et si un niveau d'accès du second dispositif de commande est le niveau d'accès spécifié.

15. Dispositif de réseau selon l'une quelconque des revendications 12 à 14, dans lequel :
quand il est déterminé, selon la condition d'exclusion, s'il faut exécuter la première demande d'accès, l'unité d'exécution exécute la première demande d'accès si la première demande d'accès est une demande d'accès envoyée par un second dispositif de commande et si un niveau d'accès du second dispositif de commande est supérieur à un niveau d'accès du premier dispositif de commande.
